# FASCICULE DE BREVET EUROPEEN

(11) **EP 1 177 234 B1**
(45) Date de publication et mention de la délivrance du brevet: **05.08.2009**
(21) Numéro de dépôt: 00925411.1
(22) Date de dépôt: 05.05.2000
(51) Int. Cl.: C08G 63/82

(54) **PROCEDE D'OBTENTION DE POLYMERES OXACARBONYLES, FONCTIONNALISATION, POLYMERES OBTENUS ET AGENTS DE FONCTIONNALISATION**
VERFAHREN ZUR HERSTELLUNG VON OXYCARBONYLPOLYMEREN, FUNKTIONALISIERUNG, HERGESTELLTE POLYMERE UND FUNKTIONALISIERUNGSAGENS
METHOD FOR OBTAINING OXACARBONYL POLYMERS, FUNCTIONALISATION, RESULTING POLYMERS AND FUNCTIONALISING AGENT

(30) Priorité: 07.05.1999 FR 9906039; 06.03.2000 FR 0002864
(43) Date de publication de la demande: 06.02.2002
(73) Titulaire: CENTRE NATIONAL DE LA RECHERCHE SCIENTIFIQUE, 75016 Paris Cédex (FR)
(72) Inventeur: LE PERCHEC, Pierre, F-69003 Lyon (FR); BAUDRY, Roselyne, F-69100 Villeurbanne (FR); ALVAREZ, Frédéric, F-69007 Lyon (FR)
(74) Mandataire: Texier, Christian
(86) Numéro de dépôt international: PCT/FR2000/001235
(87) Numéro de publication internationale: WO 2000/068293

(56) Documents cités:
- EP-A- 0 104 875
- EP-A- 0 150 962
- GB-A- 1 016 394

## Description

L'invention concerne un procédé d'obtention de polymères oxacarbonylés par ouverture de cycle et polymérisation de monomères comportant au moins une fonction oxacarbonylée cyclique telle qu'une fonction lactone.

On connaît la capacité des lactones à polymériser, dans des conditions réactionnelles et selon des mécanismes qui varient essentiellement en fonction du monomère lactone de départ et du catalyseur ou agent initiateur utilisé. Pour initier la polymérisation par ouverture de cycle, l'art antérieur enseigne une diversité d'agents initiateurs ; ainsi ce dernier peut être de nature anionique tel qu'un hydrure, un carbanion, un alkoxyde, un thiolate ou un carboxylate de métal alcalin, de métal alcalino-terreux, d'aluminium, de zinc ou d'étain ; il peut être de nature nucléophile, non chargé, tel qu'une amine tertiaire pour la polymérisation de la β-propiolactone, ou une phosphine ; il peut aussi être choisi parmi les composés protiques comme les acides carboxyliques, les alcools, les glycols, ou des fonctions polaires comme les amines primaires et secondaires et les combinaison de structures comme les alcanolamines, ou bien encore parmi les complexes de coordination tels que ceux d'aluminium.

Généralement, la réaction de polymérisation s'effectue en milieu parfaitement anhydre dans un solvant inerte, à une température devant parfois dépasser 150°C.

Les conditions de polymérisation connues à ce jour conduisent néanmoins à une forte variabilité des rendements de polymérisation et des indices de polymolécularité et de polydispersité du polymère obtenu, selon le monomère de départ. En outre, les agents initiateurs connus sont souvent indésirables et/ou toxiques.

La présente invention propose un procédé d'obtention de polymères oxacarbonylés à partir de monomères comportant au moins une fonction oxacarbonylée cyclique, et notamment une fonction lactone, permettant, dans des conditions réactionnelles douces, d'obtenir une consommation complète du ou des monomères de départ.

-En effet, selon le procédé de l'invention, d'une part une température proche de la température ambiante est souvent suffisante pour polymériser certaines lactones, dont la réaction nécessite des températures élevées par les procédés connus de polymérisation, et d'autre part on obtient des polymères exempts de monomères de départ et d'agent initiateur après lavage, ce qui rend leur isolement très facile et permet d'envisager leur utilisation dans des applications très variées, y compris celles où il est essentiel de disposer d'un polymère pur.

Le procédé de l'invention comprend les étapes suivantes :
on dispose au moins d'un monomère comprenant au moins une fonction oxacarbonylée cyclique et d'un agent initiateur,
on effectue la polymérisation ou la copolymérisation dudit monomère en masse ou en solution,
l'agent initiateur étant choisi parmi les composés de guanidine bicyclique répondant à la formule (I) ou la formule (II) 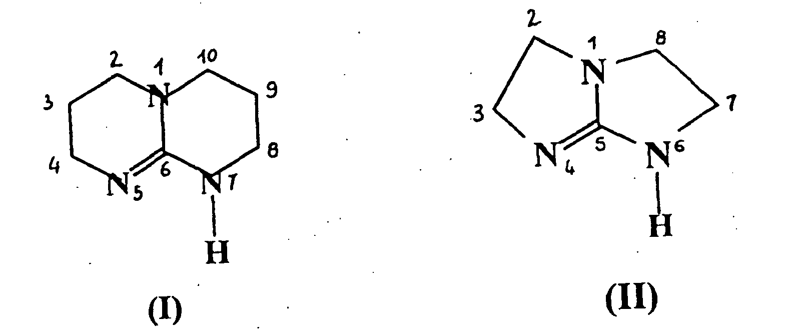 dans laquelle l'un et/ou l'autre des cycles peut être substitué, en au moins l'une quelconque des positions 2, 3, 4, 8, 9 et 10 de la formule (I) ou au moins l'une quelconque des positions 2, 3, 7et 8 de la formule (II), par au moins un radical choisi parmi les groupes alkyles ayant de 1 à 6 atomes de carbone, les groupes cycloalkyles ayant de 5 à 7 atomes de carbone, les chaînes hydrocarbonées de polystyrène.

On entend par une fonction oxacarbonylée, une fonction -O-CO- comprise dans un cycle, le monomère comportant donc au moins un hétérocycle oxygéné. A titre d'exemple, il peut s'agir d'une fonction lactone.

Un agent initiateur préféré répond à la formule (I) et est le 7H-1,5,7-triaza-bicyclo[4.4.0]déc-5-ène (désigné ci-après TBD).

Comme dit précédemment, le monomère ou les monomères peuvent comporter au moins une fonction lactone, ils sont alors avantageusement choisis dans le groupe consistant en la ε-caprolactone, la δ-valérolactone, la β-butyrolactone, la γ-butyrolactone, la 2,6-diméthyl-1,4-dioxan-2,5-dione (ou lactide), et la 1,4-dioxan-2,5-dione (ou glycolide).

En fonction du choix du ou des monomères de départ, le procédé conduit à l'obtention d'un homopolymère si l'on ne dispose que d'un monomère, ou d'un copolymère, ce dernier pouvant être un copolymère en bloc ou un copolymère statistique, si l'on met en réaction au moins deux monomères différents.

Les conditions réactionnelles préférentielles du procédé selon l'invention sont ci-après exposées, et doivent être considérées seules ou en combinaison :
- le rapport molaire du monomère ou des monomères à l'agent initiateur varie de 1 à 500, avantageusement de 1 à 200,
- la réaction est effectuée à une température variant de 0°C à 150°C, de préférence de 50°C à 120°C,
- la réaction est conduite en masse ; elle peut aussi être effectuée dans un solvant notamment choisi parmi le tétrahydrofurane (THF), le toluène, l'acétone, le dibutyléther, la durée de réaction varie de 10 minutes à 12 heures

Le procédé de l'invention présente en outre l'intérêt de permettre de fonctionnaliser les polymères obtenus in situ, directement dans le mélange réactionnel, pour obtenir des polymères modifiés par fonctionnalisation, activés ou activables. Cette fonctionnalisation est réalisée au moyen d'un agent de fonctionnalisation, et selon la destination du polymère, cette fonctionnalisation peut être particulièrement avantageuse. A titre d'illustration; on obtient après fonctionnalisation, des polylactones modifiées biodégradables, présentant les propriétés d'agent modificateur de viscosité des solvants organiques et des milieux aqueux dont l'eau. Un objet de la présente invention est un polymère oxacarbonylé susceptible d'être obtenu par le procédé d'obtention défini ci-dessus.

Un agent de fonctionnalisation selon l'invention est de préférence une molécule ou une macromolécule, linéaire ou ramifiée, comprenant au moins une fonction alcool ou amine.

Cet agent peut être sélectionné parmi :
- les composés purs de fonctionnalisation tels que le butanol, l'éthoxyéthanol, le pentaérythritol, l'allylamine, la méthoxyéthylamine, la décylamine, l'éthoxyéthanolamine, les esters des acides carboxyliques,
- les polymères fonctionnalisés comme les polymères et copolymères, tels que les polymères et copolymères d'alkylène glycol, et notamment les polymères et copolymères d'éthylène glycol, en particulier les copolymères d'éthylène glycol (PEG) et de propylène glycol (PPG), les mélanges desdits polymères, les mélanges desdits copolymères, les mélanges desdits polymères et copolymères, les polyalkylène amines tels que les Jeffamines^{®}, les polyesters tels que les polyéthylène téréphtalate, et les mélanges de ceux-ci,
- les produits naturels comme les polyglucosides et à titre d'exemple, les gommes, les dextranes, les chitosanes, l'amidon, et parmi les mélanges de ces agents, et
- les mélanges des agents précités : à titre d'exemple, on peut choisir le mélange comprenant au moins un polymère d'éthylène glycol et au moins un polyglucoside.

Les gommes, comme la gomme xanthane et la gomme guar, en mélange avec un autre agent de fonctionnalisation, tel qu'un polymère d'alkylène glycol, constituent des agents particulièrement avantageux.

La polymérisation et la fonctionnalisation peuvent être réalisées séquentiellement ou bien elles peuvent être réalisées in situ simultanément, en masse ou dans le solvant.

Ainsi, l'invention concerne un procédé d'obtention de polymères oxacarbonylés, tel que défini ci-dessus, selon lequel on ajoute au monomère et à l'agent initiateur, un agent de fonctionnalisation, selon un mode in situ, ou un mode séquence. Un agent préféré est choisi parmi les agents énumérés ci-dessus.

L'invention concerne également un polymère oxacarbonylé fonctionnalisé susceptible d'être obtenu par le procédé de polymérisation et de fonctionnalisation défini ci-dessus

Un autre objet de l'invention est l'utilisation d'un composé de guanidine bicyclique répondant à la formule (I) ou (II) précitée et décrite cl- dessus pour initier la réaction de polymérisation ou de copolymérisation de monomères comprenant au moins une fonction oxacarbonylée cyclique. Avantageusement, le composé de guanidine bicyclique est le TBD.

Selon une variante d'utilisation de l'agent d'initiation de l'invention, ce dernier est fixé directement ou indirectement, ou déposé, sur un support solide. A titre d'exemple, un support approprié est minéral
ou organique et consiste en une résine, un polymère tel qu'un polystyrène, un polypropylène, un copolymère tel qu'un copolymère polystyrène / divinylbenzène, de la silice, de l'argile, de la diatomite, de la zéolite, de l'alumine ou de l'aluminosilicate. Par « directement ou indirectement », on entend que ledit agent comporte au moins sur l'un de ses cycles un radical susceptible de se lier audit support, ou bien un radical qui sera lié audit support par l'intermédiaire d'un bras de couplage. Ce dernier est en général une chaîne hydrocarbonée. Par « déposé », on entend que le dit initiateur est adsorbé sur un support organique ou minéral.

La présente invention est ci-après illustrée par les exemples 1 à 12, à l'appui du dessin comprenant les figures 1 à 5.
La figure 1 représente la viscosité (en Pa.s⁻¹) du milieu réactionnel décrit à l'exemple 1.5 en fonction du temps (en seconde).
La figure 2 représente la viscosité (en Pa.s⁻¹) du milieu réactionnel décrit à l'exemple 1.6 en fonction du temps (en seconde).
La figure 3 représente la viscosité (en mPa.s⁻¹) de la gomme guar avant (guar initiale ou non modifiée) et après fonctionnalisation (guar modifiée) de la ε-caprolactone de l'exemple 9.5, en fonction du gradient de cisaillement (en seconde⁻¹) :
   (a) guar non modifiée à une concentration aqueuse de 1% en poids
   (b) guar non modifiée à une concentration aqueuse de 0,5%
   (c) guar modifiée à une concentration aqueuse de 2,5%
   (d) guar modifiée à une concentration aqueuse de 1 %.

La figure 4 illustre les propriétés rhéofluidifiantes de la gomme guar avant (guar initiale ou non modifiée) et après fonctionnalisation (guar modifiée) de la ε-polycaprolactone selon l'exemple 9.5, par représentation de la contrainte de cisaillement (en Pa) en fonction du gradient de cisaillement (en seconde⁻¹) :
(a) guar non modifiée à une concentration aqueuse de 1 % en poids
(b) guar non modifiée à une concentration aqueuse de 0,5%
(c) guar modifiée à une concentration aqueuse de 2,5%
(d) guar modifiée à une concentration aqueuse de 1 %.

La figure 5 illustre le comportement rhéologique d'une polycaprolactone après fonctionnalisation selon l'exemple 9.6, par représentation de la contrainte de cisaillement (en Pa) en fonction du gradient de cisaillement (en seconde⁻¹).
(a) solution à une concentration aqueuse de 6%
(b) solution à une concentration aqueuse de 4%

### Exemple 1 : Préparation de polyesters selon l'invention à partir de différentes lactones

Les polyesters obtenus répondent à la formule suivante : R-[CO-(C_{α}H₂-C_{β}H₂-C_{γ}H₂-C_{δ}H₂-C_{ε}H₂)]ₙ₋₁-O-CO-CH₂-CH₂-CH₂-CH₂-CH₂OH
où n représente l'indice de polymolécularité et R représente un groupement choisi parmi le groupe guanidine (TBD) ; OR' où R' représente H ou bien un groupe alkyle déterminé selon l'alcool retenu en fin de réaction ; une fonction acide COOH ; une fonction ester CHCOOR" ; une fonction amide CHCONHR" où R" est un groupe alkyle respectivement déterminé selon l'alcool ou l'amine utilisée en fin de réaction.

### 1.1- Préparation de l'homopolymère 3600-polycaprolactone

Dans un réacteur tricol de 100 ml sous azote, on introduit 57 g (0,5 mole) de ε-caprolactone et on ajoute 13,9 g de TBD (0,1 mole) solide, le rapport molaire monomère / agent initiateur (M/I) étant égal à 5. L'agent initiateur se dissout totalement par agitation, et la réaction est exothermique. La température atteint 75°C. On agite le mélange à 500 tours/min pendant 20 minutes. Puis on porte le mélange visqueux à 80°C pendant trois heures, puis à 100°C pendant une heure, et enfin à 120°C pendant une heure et demie.

Le produit brut est caractérisé par analyses spectrales et chromatographie par exclusion stérique (CES) avec du THF.

En effet, l'analyse RMN indique les massifs caractéristiques des polycaprolactones à δ en ppm de 1,4 CH₂ γ ; 1,65 CH₂ (δ, β) ; 2,31 CH₂ α (triplet) ; 4,06 CH₂ ε (triplet). L'extrémité de chaîne CH₂OH est pointée à ε_{T} = 3,62 ppm (triplet). Le spectre RMN donne un indice de polymolécularité de 30.

La masse moléculaire mesurée par CES (solvant THF, référence interne polystyrène) est Mn = 3675 et Mw = 12 050 ; le rapport Mn/Mw = 3,28.

La présence de l'agent initiateur est parfaitement détectable par RMN, à δ = 2,22 et 3,34 ppm (sous forme de massifs).

Le polymère peut être obtenu exempt de traces d'agent initiateur si nécessaire, par dissolution du polymère dans un solvant tel que le chlorure de méthylène ou le toluène, suivie d'une extraction à l'eau acidifiée. Au mélange visqueux, on ajoute 200 ml de CH₂Cl₂ et 200 ml d'une solution aqueuse d'acide acétique dilué à 2%. On décante et on isole la phase organique. On lave avec 100 ml d'eau contenant 2% d'HCl, puis de nouveau à l'eau pure, et on sèche la phase organique.

On isole 55 g de polycaprolactone pure identique à un échantillon authentique. Aucune trace de monomère n'est détectable par RMN et par CES.

### 1.2- Préparation de l'homopolymère 5500-polycaprolactone

Le mode opératoire décrit ci-dessus en 1.1 est répété pour un rapport molaire M/l de 10, avec 57 g (0,5 mole) de ε-caprolactone et 6,95 g (0,05 mole) de TBD.

La réaction est exothermique et le mélange devient visqueux après quinze minutes d'agitation.

Le même protocole de synthèse que celui décrit en 1.1 fournit la polycaprolactone brute puis la polycaprolactone purifiée par lavage.

Les masses moléculaires moyennes obtenues par CES (THF) sont : Mn = 5 500 et Mw = 20 900, Mn/Mw = 3,80.

### 1.3- Préparation de l'homopolymère 30 000-polycaprolactone

Le mode opératoire décrit ci-dessus en 1.1 est répété pour un rapport molaire M/l de 40, avec 57 g (0,5 mole) de ε-caprolactone et 1,73 g (0,0125 mole) de TBD.

La réaction est exothermique et la mélange devient visqueux après quinze minutes d'agitation.

Le même protocole de synthèse que celui décrit en 1.1 fournit la polycaprolactone brute puis la polycaprolactone purifiée par lavage.

L'analyse par RMN du proton indique un indice de polymolécularité de 230. Les masses moléculaires moyennes obtenues par CES (THF) sont Mn = 34 000 et Mw = 49 400, Mn/Mw = 1.32.

### 1.4- Préparation de l'homopolymère 30 000-polycaprolactone

Le mode opératoire décrit ci-dessus en 1.1 est répété pour un rapport molaire M/l de 185, avec 57 g (0,5 mole) de ε-caprolactone et 0,38 g (0,0027 mole) de TBD.

L'analyse par RMN du proton indique un indice de polymolécularité de 230. Les masses moléculaires moyennes obtenues par CPG (THF) sont Mn = 30 700 et Mw = 62 000, Mn/Mw = 2,02.

### 1.5- Préparation de l'homopolymère 15 000-polycaprolactone

La polymérisation de ε-caprolactone est réalisée pour un rapport molaire M/l de 100, dans les entrefers discoïdaux d'un rhéométrix à la température de 80°C.

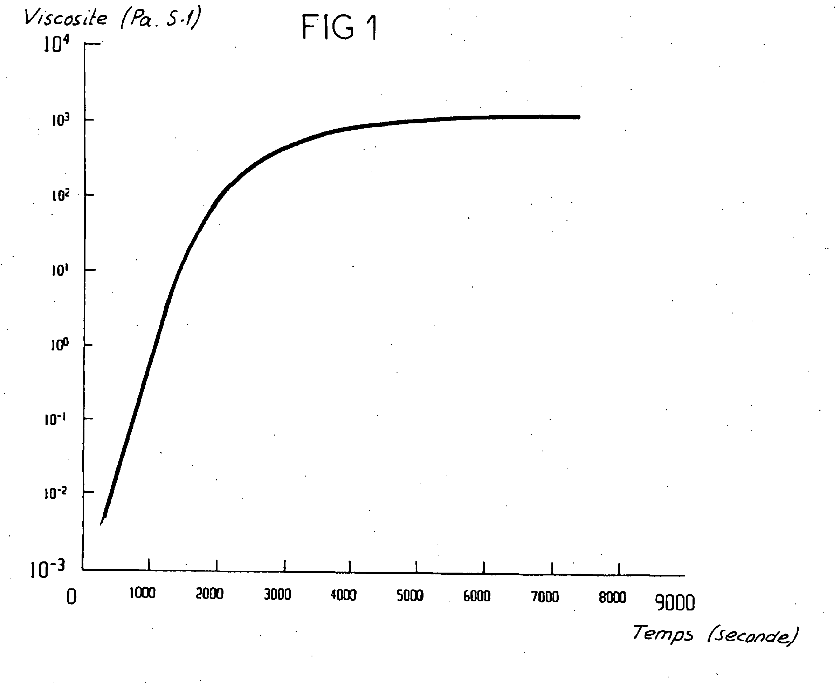

La montée de viscosité est visualisée sur la figure 1. Le plateau visqueux est atteint après 4500 secondes de contact. La valeur de viscosité est alors de 1 100 Pa.s⁻¹.

L'analyse RMN ¹H de l'échantillon donne un indice de polymolécularité de 98. Les masses moléculaires moyennes obtenues par CES (THF) sont Mn = 15 000 et Mw = 29 000, Mn/Mw = 1,95.

### 1.6- Préparation de l'homopolymère 26 000-polycaprolactone

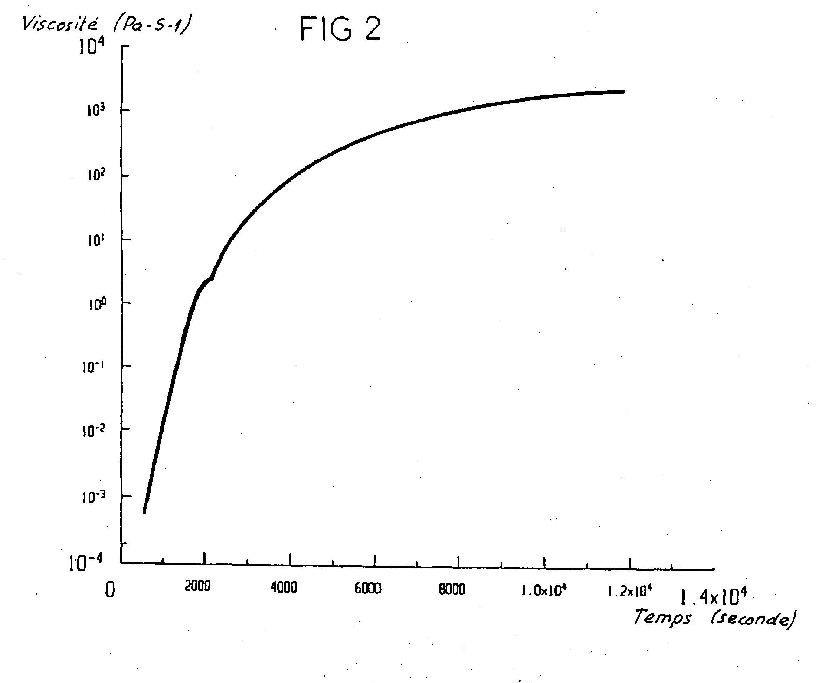

La polymérisation de ε-caprolactone est réalisée pour un rapport molaire M/l de 200, sur les entrefers discoïdaux d'un rhéométrix à la température de 100°C.
La montée de viscosité est visualisée sur la figure 2. Le plateau visqueux est atteint après 4500 secondes de contact. La valeur de viscosité est alors de Z100 Pa.s⁻¹.

L'analyse RMN ¹H de l'échantillon donne un indice de polymolécularité de 150. Elle donne des masses moléculaires moyennes obtenues par CPG (THF) sont Mn = 26 000 et Mw = 46 000, Mn/Mw = 1,79.

### Exemple 2 : Préparation de l'homopolymère polyvalérolactone selon l'invention à partir de la δ-valérolactone

Le polymère obtenu répond à la formule suivante :
-[CO-(CᵤH₂-C_{β}H_{z} -C_{γ}H_{z}C₈H₂)]ₙ₁-O-CO-CH₂-CH₂-CH₂-CH₂OH où n représente l'indice de polymolécularité

La composition du mélange réactionnel est la suivante : 3,45 g (0,0345 mole) de δ-valérolactone, 0,48 g (0,00345 mole) de TBD dans 15 ml de THF anhydre.

La réaction est exothermique et le mélange devient visqueux après quinze minutes d'agitation.

L'analyse par RMN du proton indique un indice de polymolécularité de 30. Les massifs caractéristiques des polyvalérolactones à δ en ppm de 1,69 CH₂ δ, β ; 2,32 CH₂ α ; 4,1 CH₂ δ (triplet). L'extrémité de chaîne CH₂OH est pointée à δ = 3,62 ppm (triplet).

### Exemple 3 : Préparation de copolymères à partir de la δ -valérolactone et de la ε-caprolactone

Les conditions réactionnelles sont les identiques à celles données à l'exemple 1.1, avec un mélange de 51,3 g de ε-caprolactone (0,45 mole) et 5 g de δ-valérolactone (0,05 mole). Le rapport molaire M/l est de 20.

Le spectre RMN du copolymère obtenu montre l'absence des monomères de départ et est conforme au polymère attendu.

La GPC indique une seule distribution Mn = 31000 et Mw = 10 600 ; le rapport Mn/Mw = 3,4.

### Exemple 4 : Préparation d'un homopolymère polylactide à partir de d,1-lactide (ou 2,6-diméthyl-1,4-dixoxan-2,5.dione)

20 ml de toluène anhydre sont introduits dans un tricol de 50 ml. On additionne un mélange de 3.26 g (0,0227 mole) de lactide et 0,315 g (0,00227 mole) de TBD ; le rapport molaire M/l est de 10. La température est portée à 110°C pendant 4 heures. Le lavage de la phase organique à l'acide acétique 2% puis à l'acide chlorhydrique 2% puis à l'eau, suivi de l'évaporation du solvant fournit le polylactide pur identifié par RMN ¹H : δ = 1,55 ppm CH₃ (doublet) ; δ = 5,17 CH pic large ; δ = 4,36 ppm CH (quartet).

Le degré de polymolécularité déterminé par RMN est de 10. Le polymère contient moins de 3% de monomère résiduel. Les masses moléculaires moyennes obtenues par CPG (THF) sont : Mn = 2 140 et Mw=4 990, Mn/Mw = 2,33.

### Exemple 5: Préparation d'un homopolymère ε-caprolactone dans le THF

La réaction est conduite en solution dans le THF à 60°C. On place dans 10 ml de solvant 1,06 g de TBD, puis on ajoute goutte à goutte 33 g de ε-caprolactone dissous dans 30 ml de solvant. On porte le mélange réactionnel au reflux du THF pendant 180 minutes sous agitation à 500 tours/min, puis on le verse dans 100 ml d'eau. Il se forme une émulsion. Le solvant de réaction est chassé et remplacé par 100 ml de CH₂Cl₂. La phase organique est décantée et lavée avec 100 ml d'eau contenant 2% HCl, puis à l'eau pure et le solvant est éliminé. La polycaprolactone est identifiée exempt de monomère.

### Exemple 6: Préparation d'un copolymère ε-caprolactone-d,l-lactide statistique

Le copolymère ε-caprolactone(C)-d,1-lactide(L) statistique peut être représenté par CLCLCLCLCLCCLCLL-etc.

Dans un réacteur tricol de 100 ml sous azote, on introduit 14,4 g (0,1 mole) de d,l-lactide et 11,4 g (0,1 mole) de ε-caprolactone et 1,39 g de TBD (0,01 mole) solide. Le rapport molaire M/l est égal à 20. L'agent initiateur se dissout totalement par agitation et la réaction est exothermique. La température atteint 50°C. On agite le mélange à 500 tours/min pendant 30 minutes. Puis on porte le mélange visqueux à 60°C pendant une heure, puis à 80°C pendant trois heures.

L'analyse RMN indique les massifs α, β, γ, δ, ε de la lactone polymérisée accompagnés des massifs caractéristiques du d,l-lactide polymérisé. La composition moyenne en masse du copolymère est de 50 unités de ε̅-caprolactone pour 38 unités de d,l-lactide.

La présence d'un copolymère statistique est prouvé par RMN ¹³C en comparant les spectres RMN des homopolymères et du copolymère formé. Les enchaînements LC et CL des C = O donnent des δ en zone δ = 170-173 ppm alors que les homopolymères correspondant sont à δ = 173,3 ppm pour le C=O de la polycaprolactone et δ= 169-169,8 ppm pour le C = O du d,l-polylactide. Cette répartition est confirmée par les déplacements chimiques localisés des ¹³C des CH et CH₂ pour les mêmes homo- et co-polymères.

### Exemple 7 : Préparation d'un copolymère ε-caprolactone-d,1-lactide en bloc, en solution dans le THF

Le copolymère ε-caprolactone(C)-d,1-lactide(L) en bloc peut être représenté par CCCCC-LLLLL.

Dans un réacteur tricol de 100 ml sous azote, on introduit 14,4 g (0,1 mole) de ε-caprolactone et 1,39 g (0,01 mole) de TBD solide. On porte le mélange réactionnel à 80°C pendant deux heures et on introduit 11,4 g (0,1 mole) de d,l-lactide. Le rapport molaire M/l initial est égal à 10. On poursuit la polymérisation pendant trois heures à 80°C. Le mélange visqueux est isolé et purifié selon la méthode habituelle.

L'analyse RMN indique les massifs α, β, γ, δ, ε de la lactone polymérisée accompagnés des pics caractéristiques, du d,1-lactide polymérisé à δ = 1,38 ppm (multiplet) ; 4,40 ppm (quartet) et 5,17 ppm (massif). La composition moyenne en masse du copolymère est de 42 unités ε-caprolactone pour 28 (56 fragments OCH(CH₃)CO) de d,l-lactide.

La formation d'un copolymère en bloc est visualisée par RMN ¹³C. La comparaison des spectres RMN des homopolymères respectifs de la ε-caprolactone et du d,1-lactide avec celui du copolymère formé montre que les enchaînements LL et CC des C = O sont associés à δ = 173,3 ppm du C = O des enchaînements CC polycaprolactone et δ = 169-169,8 ppm du C = O du d,l-polylactide.

Aucune trace de copolymère n'est détectée en zone de δ = 170-173 ppm des copolymères statistiques.

Cette répartition spécifique est confirmée par les déplacements chimiques ¹³C des CH et CH₂ pour les mêmes homo- et co-polymères de ε-caprolactone (CCC etc) et (LLL etc). La présence de copolymère repose sur le fait que l'extrémité de chaîne de ε-caprolactone (CH₂OH) n'est pas détectable à δ = 3,62 ppm dans le copolymère obtenu après addition séquentielle des deux monomères dans l'ordre ε-caprolactone, d,l-lactide, alors que l'on observe le signal à δ = 4,4 ppm correspondant au CH-OH de bout de chaîne du lactide ouvert.

### Exemple 8 : Préparation d'un homopolymère polyglycolide

La réaction est conduite dans l'acétone, solvant du glycolide monomère. La composition du mélange initial est de 11,6 g (0,1 mole) de glycolide pour 0,458 g (0,0033 mole) de TBD. Le rapport molaire M/l est de 30. La réaction est exothermique et un précipité blanc se forme immédiatement dès la température ambiante et les premières fractions de TBD additionné. On porte au reflux de l'acétone pendant deux heures. On isole le solide blanc par filtration et évapore sous vide le solvant.

L'analyse RMN (DMSO-D⁶ à chaud) indique la formation d'un polyglycolide avec l'apparition d'un singulet à δ = 4,85 ppm. Le bout de chaîne CH₂OH est identifiable à δ = 4,10 ppm et donne un degré de polymolécularité de 30. Le spectre RMN ¹³C est caractéristique de la formation du polyglycolide en regard du déplacement chimique du monomère, avec un δ = 166 ppm du C = O ; δ = 60,4 ppm du CH₂ et δ = 59,2 ppm du CH₂OH, en RMN du ¹³C.

L'insolubilité connue du polymère se vérifie : seuls le DMSO à chaud, l'hexafluropropanol et l'hexafluoroacétone sont solubilisants du polymère.

### Exemple 9 : Préparation de polylactones et fonctionnalisation in situ

### 9.1- Protocole expérimental standard

On mélange la lactone avec l'agent de fonctionnalisation et on homogénéise le mélange à 80°C. Après homogénéisation, on introduit l'agent initiateur en une seule fois. On chauffe pendant 3 heures à 80°C, puis une heure à 100°C et enfin une heure et demie à 120°C. Le mélange réactionnel brut est récupéré et analysé.

Les exemples 9.2 à 9.6 suivants illustrent l'application de ce protocole à l'obtention de polylactones fonctionnalisées.

9.2- Préparation d'une ε-polycaprolactone et fonctionnalisation par l'éthoxyéthanol (addition simultanée)

On prépare une ε-polycaprolactone fonctionnalisée conformément au mode opératoire décrit en 9.1 avec 25 g (0,22 mole) de ε-caprolactone, 2,03 g (0,0146 mole) de TBD et 1,98 g d'éthoxyéthanol. Le rapport molaire M/l est de 15.

On prélève un échantillon brut. Le polymère est dissous dans 200 ml de CH₂Cl₂ et 100 ml d'eau contenant 2% d'HCl. La phase organique est décantée puis lavée par 100 ml d'eau. On évapore le solvant, on reprend au toluène qui est évaporé à son tour.

On isole un échantillon lavé.

La comparaison des spectres de RMN du produit brut avant et après lavage et extraction indique la présence du groupe éthoxyéthoxy dans la chaîne de la ε-polycaprolactone : δ = 1,2 ppm triplet du groupe méthyle ; δ =4,2 ppm triplet du groupe OCH₂CH₂-O-CO. Le spectre RMN ¹H contient plus particulièrement le triplet à δ = 4,23 ppm caractéristique des protons de CH₂ de l'ester du groupe éthoxyéthanol fixé.

L'analyse CPG donne :
Mn final = 980, Mw final = 3 800 ; Mn/Mw = 3,88.

On observe qu'en augmentant le rapport molaire M/l (réaction simultanée de 25 g de caprolactone, 1 g d'éthoxyéthanol et 1 g de TBD ; la réaction est exothermique, la température atteint 65°C au moment du mélange), et pour un même temps de réaction, on obtient un taux de conversion plus faible avec plus de 50% de caprolactone résiduelle. Les masses du polymère brut sont Mn 3 600 et Mw 7 490 ; Mn/Mw = 2,06.

9.3- Préparation d'une ε-polyraprolactone et fonctionnalisation par le polyoxyéthylène glycol 6000 (PEG 6000, teneur moyenne en groupe hydroxyle 5,3 x10³ /g)

On prépare une polycaprolactone modifiée par le PEG 6000 selon le mode opératoire décrit dans l'exemple 9.1. Les rapports molaires monomère / initiateur et PEG 6000 / initiateur sont respectivement de 30 et 0,62. Le mélange initial de 50,6 g (0,44 mole) d'ε-caprolactone et de 54,6 g de PEG 6000 19.10⁻³ mole) est porté à 60°C. 2,02 g (1,45 x 10⁻² mole) de TBD sont alors ajoutés sous forme solide en une seule opération. La réaction est exothermique et la température atteint 75°C. On maintient à 80°C pendant 3 heures, puis une heure à 100°C et finalement 1h30 à 120°C. On isole le produit brut blanc qui se solidifie par refroidissement.

L'analyse RMN révèle les éléments de structure de la polycaprolactone comme indiqué dans l'exemple 1.1 et un signal des protons CH₂CH₂ du polyoxyéthylène à δ = 3,64 ppm. On identifie le signal à δ = 4,2 ppm caractéristique des protons du CH₂ de l'ester issu du couplage du PEG 6000 et de la polycaprolactone.

L'analyse CES donne les masses moléculaires Mn = 9 500 et Mw = 10 800 et un indice de polydispersité Mn/Mw = 1,14.

### 9.4- Préparation d'une ε-polycaprolactone et fonctionnalisation par le polyoxyéthylène glycol 20 000 (PEG 20 000, teneur en groupe hydroxyle 1,6x10⁻³ molaire)

On opère selon le mode opératoire standard précité avec 25,3 g (0,22 mole) d'ε-caprolactone; 91 g de PEG 20 000 (4, 55x10⁻³ mole) et 1,01 g (0,0073 mole) de TBD. Les rapports molaires monomère / initiateur et PEG 20 000 / initiateur sont respectivement de 30 et 0,62. On isole le produit brut qui se solidifie par refroidissement.

L'analyse RMN révèle les éléments de structure de la polycaprolactone comme indiqué dans l'exemple 1.1 et un signal de CH₂CH₂ de PEG à δ = 3,64 ppm. On identifie un signal très faible à δ = 4,2 ppm caractéristique des protons du CH₂ de l'ester formé par couplage de fonction alcool du PEG et de la polycaprolactone.

### 9.5- Préparation d'une ε-polycaprolactone et fonctionnalisation par une gomme guar.

On opère selon le mode opératoire standard selon 9.1, avec comme mélange initial 35 g (0,31 mole) d'ε-caprolactone, 1,39 g (10⁻² mole) de TBD et 11,4 g de gomme guar (PM = 220 000) (0,052x10⁻³ mole). Les rapports molaires monomère / initiateur et gomme guar / initiateur sont respectivement de 30 et 0,62. On isole le produit brut jaune clair qui se solidifie par refroidissement.

L'analyse RMN révèle les éléments de structure de la polycaprolactone comme indiqué dans l'exemple 1.1 et une série complexe de pics correspondant à la gomme guar polyglucosidique.

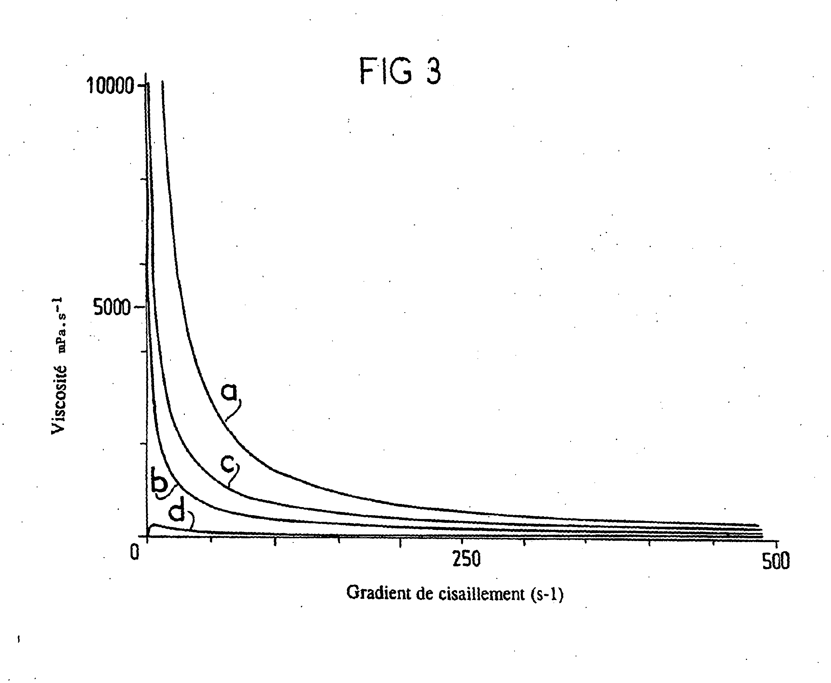

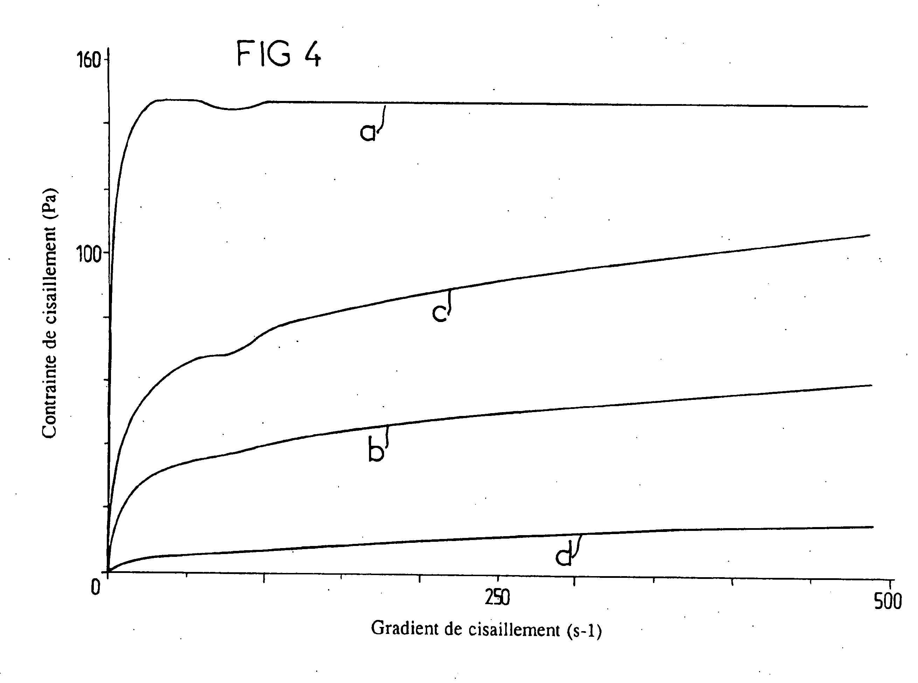

On caractérise le greffage par mesure de viscosité d'une suspension de gomme guar modifiée reportée sur la Figure 3. Le greffage de la polycaprolactone est visualisé par un changement de solubilité de la gomme guar modifié qui devient soluble dans les solvants organiques, notamment le THF et une modification de la viscosité, telle que mise en évidence sur la Figure 4.

### 9.6- Préparation d'une ε-polycaprolactone et fonctionnalisation par un mélange PEG 20 000 - gomme xanthane.

On opère selon le mode opératoire standard de l'exemple 9-1 avec un mélange initial constitué de 35 g (0,31 mole) d'ε-caprolactone; 91 g de PEG 20 000 (4,55 x 10³ mole) et 2 g de gomme xanthane. La température interne du mélange est portée à 60°C et on ajoute 1,39 g (10² mole) de TBD. Les rapports molaires monomère / initiateur et PEG 20 000 / initiateur sont respectivement de 30 et 0,45. On isole le produit brut qui se solidifie par refroidissement.

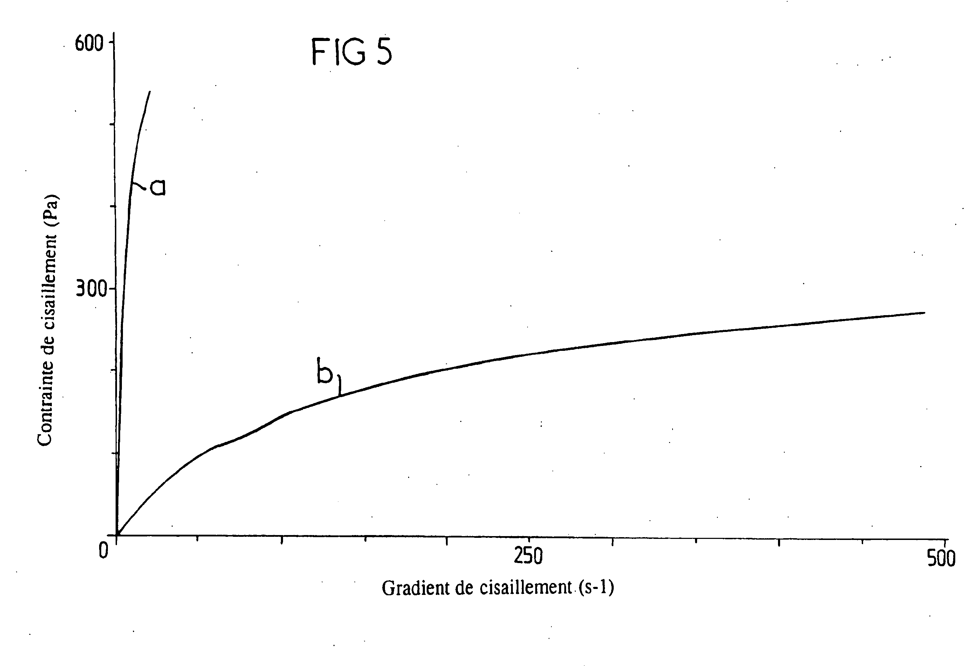

Le comportement visqueux de la solution aqueuse est mis en évidence par mesure rhéologique sur Rhéomat 30. La valeur de la contrainte de cisaillement mesurée sur une solution aqueuse à 6% atteint 500 Pa à 10 s⁻¹ de fréquence de cisaillement. Sur la Figure 5, la courbe de contrainte de cisaillement en fonction de la fréquence de cisaillement met en évidence un effet rhéofluidifiant.

### Exemple 10 : Préparation de polylactones et fonctionnalisation, selon un mode séquencé

### 10.1- Protocole expérimental standard

On chauffe la lactone à 80°C. Après homogénéisation de la lactone, on ajoute l'agent initiateur. Pour la polymérisation, on chauffe pendant 3 heures à 80°C. On ajoute ensuite l'agent de fonctionnalisation, puis on porte le mélange à 100°C pendant une heure et à 120°C pendant une heure et demie. Le mélange réactionnel brut est récupéré et analysé.

Les exemples 10.2 à 10.7 suivants illustrent l'application de ce protocole à l'obtention de polylactones fonctionnalisées.

### 10.2- Préparation d'une ε-polycaprolactone et fonctionnalisation

### par le butanol (addition séquencée)

On prépare un polylactone conformément au mode opératoire décrit en 1.1 avec 11,4 g (0,1 mole) de ε-caprolactone et 2,78 g (0,02 mole) de TBD. Le rapport molaire M/l est de 20.

Le réacteur, équipé d'un réfrigérant, est maintenu 3 heures à 80°C. Le polymère visqueux est traité par 3,6 g de butanol (0,05 mole). On prolonge le temps de réaction en portant le bain d'huile de chauffage à 100°C pendant une heure, puis à 120°C pendant une heure et demie.

Le spectre RMN du produit brut après lavage et extraction au chlorure de méthylène indique la présence du segment butoxy dans la chaîne de la ε-polycaprolactone (δ =0,92 ppm triplet du groupe méthyle). La RMN du carbonyle (C = O) indique deux types de C = O : le C = O de la polycaprolactone à δ = 173,3 ppm et le C=O de l'ester n-butoxy à δ = 173,1 ppm.

Le degré de fonctionnalisation évalué par RMN est de 46%.

L'analyse CES donne les résultats suivants :
avant addition du butanol, Mn initial = 4400, Mw initial = 10 200 ; Mn/Mw = 2.32,
après addition du butanol, Mn final = 1350, Mw final = 3650 ; Mn/Mw = 2,69.

### 10.3- Préparation d'une ε-polycaprolactone et fonctionnalisation par l'éthoxyéthanol (addition séquencée)

On prépare une polycaprolactone conformément au mode opératoire décrit en 1.1 avec 25 g (0,22 mole) de ε-caprolactone et 2,03 g (0,0146 mole) de TBD. Le rapport molaire M/l est de 15.

La réaction est exothermique et la température atteint 65°C. Le milieu devient visqueux. Le réacteur est porté 3 heures à 80°C. Le polymère visqueux est traité par 1,98 g d'éthoxyéthanol (0,022 mole). On prolonge le temps de réaction en portant le bain d'huile de chauffage à 100°C pendant une heure, puis à 120°C pendant une heure et demie. On prélève l'échantillon brut. Le polymère est dissous dans 200 ml de CH₂Cl₂ et 100 ml d'eau contenant 2% d'HCl. La phase organique est décantée puis lavée par 100 ml d'eau. On évapore le solvant, on reprend au toluène qui est évaporé à son tour.

La comparaison des spectres de RMN du produit brut avant et après lavage et extraction indique la présence du groupe éthoxyéthoxy, dans la chaîne de la ε-polycaprolactone : δ = 1,2 ppm triplet du groupe méthyle ; δ =4,2 ppm triplet du groupe OCH₂CH₂-O-CO. Le spectre RMN ¹H contient plus particulièrement le triplet à δ = 4,23 ppm caractéristique des protons de CH₂ de l'ester du groupe éthoxyéthanol fixé.

Le degré de fonctionnalisation est évalué à 70%.

L'analyse RMN ¹³C des CO montre la présence des CO de la polycaprolactone à δ =173,27 ppm et le CO d'ester lié au segment butoxy à δ = 173,12 ppm.

L'analyse CES donne les résultats suivants :
avant addition de l'éthoxyéthanol : Mn initial = 3600, Mw initial = 12900 ; Mn/Mw = 3,53 ;
après addition de l'éthoxyéthanol : Mn final = 1160, Mw final = 3790 ; Mn/Mw = 3,25.

### 10.4- Préparation d'une ε-polycaprolactone et fonctionnalisation par l'allylamine (addition séquencée)

On prépare une polycaprolactone conformément au mode opératoire décrit en 1.1 avec 25 g (0,22 mole) de ε-caprolactone, 3,04 g (0,022 mole) de TBD. Le rapport molaire M/l est de 10.

La réaction est exothermique et la température atteint 65 °C.

Le milieu devient visqueux. Le réacteur est porté 3 heures à 80°C. Le polymère visqueux est traité par 1,25 g d'allylamine (0,022 mole). On prolonge le temps de réaction en portant le bain d'huile de chauffage à 100°C pendant une heure, puis à 120°C pendant une heure et demie. On prélève l'échantillon brut. Le polymère est dissous dans 200 ml de CH₂Cl₂ et 100 ml d'eau / HCl 2%. La phase organique est décantée puis lavée par 100 ml d'eau. On évapore le solvant, on reprend au toluène qui est évaporé à son tour.

L'analyse RMN ¹H indique la présence caractéristique des protons du groupement allyle sous forme d'un massif constitué d'un massif à δ = 5,1 ppm pour le CH₂ α de la double liaison, un massif complexe à δ = 5,6-5,9 ppm pour les protons sur la double liaison. L'analyse RMN ¹³C donne δ_{C=O} = 173, 510 ppm pour le groupe C = O de la polycaprolactone et δ_{C=O} = 172,583 ppm pour le C = O du groupe O = C-NH de couplage.

Le rapport d'intégration RMN du CH₂ de bout de chaîne sur le reste de polycaprolactone indique un degré de polymolécularité de 6.

La CES indique un polymère exempt de monomère et d'allylamine.

### 10.5- Préparation d'une ε-polycaprolactone et fonctionnalisation par la méthoxyéthylamine (addition séquencée)

On prépare une polycaprolactone conformément au mode opératoire décrit en 1.1 avec 25 g (0,22 mole) de ε-caprolactone et 3,04 g (0,022 mole) de TBD. Le rapport molaire M/l est de 1 /10.

La réaction est exothermique. Le milieu devient visqueux. Le réacteur est porté 3 heures à 80°C. Le polymère visqueux est traité par 1,65 g de méthoxyéthylamine (0,022 mole). On prolonge le temps de réaction en portant le bain d'huile de chauffage à 100°C pendant une heure, puis à 120°C pendant une heure et demie. On prélève l'échantillon brut. Le polymère est dissous dans 200 ml de CH₂Cl₂ et 100 ml d'eau. La phase organique est décantée puis lavée par 100 ml d'eau. On évapore le solvant, on reprend au toluène qui est évaporé à son tour.

L'analyse RMN ¹H indique la présence caractéristique des protons du groupement méthoxy sous forme d'un singulet à δ = 3,36 ppm (CH₃O). Le carbonyle du groupement amide (CO-NH) est pointé à δ = 173,735 ppm auprès du carbonyle de la polycaprolactone à δ = 173,5 ppm.

Le rapport d'intégration RMN du CH₂ de bout de chaîne sur le reste polycaprolactone indique un degré de polymolécularité de 6.

La CES indique un polymère exempt de monomère.

### 10.6- Préparation d'une ε-polycaprolactone et fonctionnalisation par la décylamine (addition séquencée)

On prépare une polycaprolactone avec 25 g (0,22mole) de ε-caprolactone et 0,1 g (0,0073 mole) de TBD. Le rapport molaire M/l est de 30.

La réaction est exothermique. Le milieu devient visqueux. Le réacteur est porté 3 heures à 80°C. Le polymère visqueux est traité par 3,45 g de décylamine (0,0022 mole). On prolonge le temps de réaction en portant le bain d'huile de chauffage à 100°C pendant une heure, puis à 120°C pendant une heure et demie. On prélève l'échantillon brut. Le polymère est dissous dans 200 ml de CH₂Cl₂ et 100 ml d'eau. La phase organique est décantée puis lavée par 100 ml d'eau. On évapore le solvant, on reprend au toluène qui est évaporé à son tour.

L'analyse RMN ¹H indique la présence caractéristique des protons du groupement CH₃ δ = 0,9 ppm sous forme d'un triplet. La présence des groupements CH₂ de l'amine modifie le massif des CH₂ à δ = 1,7 ppm. Le groupe carbonyle d'amide est identifié par RMN ¹³C à δ = 172,47 ppm., auprès du groupe C=O de la polycaprolactone à δ_{C=O} = 173,18 ppm.

Le rapport d'intégration du bout de chaîne sur le reste polycaprolactone indique un degré de polymérisation (déterminé en CES) de 33, avant fonctionnalisation, et de 22, après traitement par la décylamine. Le taux de fixation apprécié par RMN est de 70%.

La CES indique un polymère exempt de monomère.

L'analyse CES (THF) donne les résultats suivants :
après addition de la décylamine : Mn finale = 3700 et Mw finale 8600 ; Mn/Mw = 2,32.

### 10.7- Préparation d'une ε-polycaprolactone et fonctionnalisation par le tétraéthylène glycol 200 (TEG , M = 194, teneur moyenne en groupe hydroxyle 0,16 eq./g) (addition séquencée)

On prépare une polycaprolactone modifiée par le TEG-200 selon le mode séquentiel décrit en 10.1.

Le rapport molaire monomère / initiateur est de 30; celui du TEG 200 / initiateur est de 0,89. 35 g (0,31 mole) d'c-caprolactone sont portés à 60°C, on ajoute 1,39 g (0,01 mole) de TBD sous forme solide en une seule opération. La réaction est exothermique et la température atteint 75°C. La température est maintenue à 80°C pendant trois heures. L'ε-caprolactone polymérise et le milieu devient pâteux. On ajoute 1,71g (0,89x10-²mole) de TEG. On porte le mélange une heure à 100°C puis 1 h30 à 120°C. On isole un produit brut légèrement rosé qui se solidifie par refroidissement.

L'analyse RMN révèle les éléments de structure de la polycaprolactone comme indiqué dans l'exemple 1.1 et un signal des protons CH₂CH₂ du tétraoxyéthylène à δ = 3,64 ppm (multiplet). On identifie le signal à δ = 4,2 ppm (triplet) caractéristique des protons du CH₂ de l'ester issu du couplage du TEG-200 et de la polycaprolactone. On note l'élimination complète de l'initiateur par le lavage.

L'analyse CES donne une seule distribution de masses moléculaires Mn = 10 900 et Mw = 29000 soit un indice de polydispersité Mn/Mw = 2,6 de la polylactone avant fonctionnalisation et Mn = 4400 et Mw = 9300 et un indice de polydispersité Mn/Mw = 2,1 de la polycaprolactone fonctionnalisée par le TEG-200.

Dans un second essai, une quantité équivalente du polymère brut est dissous dans 100 ml de CH₂Cl₂ et lavé avec 100 ml d'HCl 3N puis par 100 ml d'eau. On décante le mélange émulsionné et récupère la phase organique laquelle est séchée puis évaporée, sous vide pendant deux heures sous 10⁻¹ mm Hg. Le polymère blanc se solidifie. L'analyse RMN indique l'absence de l'initiateur.

### Exemple 11 : Préparation de polylactides et fonctionnalisation, in situ

### 11.1- Protocole expérimental standard

On mélange le lactide avec l'agent de fonctionnalisation et on homogénéise le mélange à 80°C. Après homogénéisation, on introduit l'agent initiateur en une seule fois. On chauffe pendant 3 heures à 80°C, puis une heure à 100°C et enfin une heure et demie à 120°C. Le mélange réactionnel brut est récupéré et analysé.

Les exemples 11.2 à 11.4 suivants illustrent l'application de ce protocole à l'obtention d'un polylactide fonctionnalisé.

11.2- Polymérisation d'un (D,L)-lactide et fonctionnalisation par un PEG 10 000.

On opère selon le mode opératoire standard de l'exemple 11-1 avec un mélange initial de 5,8 g (0,05 mole) de (D,L)-lactide et 8 g de PEG 10 000 (0,8x10³ mole). La température interne du mélange est portée à 60°C et on ajoute 280 mg (2,01 x 10³ mole) de TBD. Les rapports molaires monomère / initiateur et PEG 10 000 / initiateur sont respectivement de 25 et 0,40. On isole un solide cassant blanc.

Le spectre RMN (CHCl₃) montre les éléments caractéristiques à δ = 1,57 ppm (CH₃, massif); δ=5,17ppm (O-CHCH₃, multiplet), δ = 4,32 ppm (CH₂CH₂-OCO, multiplet), δ = 4,36 ppm (HO-CH-CH₃, quartet), δ = 10,3 ppm (COOH). L'analyse RMN indique la présence d'un groupe ester de couplage lactide - PEG et des rapports d'abondance polylactide / extrémité de chaîne OH / extrémité de chaîne COOH de 0,035 / 0,038 / 0,032.

La mesure CES des masses moléculaires donne Mn = 15300, Mw = 17300 et Mn/Mw = 1,13.

Le produit dissous dans CH₂Cl₂ puis lavé à l'eau acidifiée par HCl (pH= 3) donne le (D,L)-polylactide-PEG exempt de TBD.

### 11.3- Polymérisation d'un (L) lactide et fonctionnalisation par un PEG 10 000

On opère selon le mode opératoire de l'exemple 11-1 avec un mélange initial de 2,9 g (0,025 mole) de (L) lactide et 6 g de PEG 10 000 (0,6x10⁻³ mole). La température interne du mélange est portée à 60°C et on ajoute 139 mg (10⁻³ mole) de TBD. Les rapports molaires monomère / initiateur et PEG 10 000 / initiateur sont respectivement de 25 et 0,60. On isole un solide cassant blanc.

Le spectre RMN donne les éléments caractéristiques à δ = 1,57-9 ppm (CH₃, doublet); δ = 5.15-7 ppm (O-CHCH₃, doublet), δ = 4,32 ppm (CH₂CH₂-OCO, multiplet), δ = 4,36 ppm (HO-CH-CH₃, quartet), δ = 10.3 ppm (COOH). L'analyse RMN indique clairement la présence d'un groupe ester de couplage lactide-PEG et des rapports d'abondance ester de (L)-polylactide-PEG / extrémité de chaîne OH / extrémité de chaîne COOH, de 0,068 / 0,049 / 0,043.

La mesure CES des masses moléculaires donnent Mn =14 400 et Mw = 16 600 et Mn/Mw = 1,15.

Le produit brut dissous dans CH₂Cl₂ puis lavé à l'eau acidifiée par HCl (pH=3) donne le (L)-polylactide-PEG exempt de TBD.

### 11.4- Polymérisation de (D,L)-lactide - glycolide et fonctionnalisation par un PEG 10 000.

On opère selon un mode opératoire modifié de l'exemple 11-1. Le mélange initial contient 3,5 g (2,2x10⁻² mole) de (D,L)-lactide et 4 g de PEG 10 000 (0,4x10⁻³ mole). On porte à 60°C et on ajoute 0,28 g (2 × 10⁻³ mole) de TBD initiateur. La réaction de polymérisation-greffage est menée à son terme selon le protocole de l'exemple 1.1. La température est ramenée à 50°C au terme de la réaction et on ajoute 2,2 g (1,9 × 10⁻² mole) de glycolide qui réagissent instantanément. On maintient 30 min à 80°C et on isole le solide dur et cassant légèrement jaune.

L'analyse RMN montre les éléments caractéristiques du poly (D,L)-lactide (δ = 5,18 ppm), du PEG à δ = 3,63 ppm, le CH₂ caractéristique d'un groupe ester de couplage à δ = 4,2-4,3 ppm (sous forme d'un multiplet) , le signal singulet du polyglycolide à δ = 4,8ppm (CH₂OCO) et de son CH₂ de bout de chaîne à 4,28 ppm (CH₂OH). Le polymère à bloc est peu soluble dans les solvants organiques, il se solubilise dans le chloroforme et le DMSO à chaud.

### Exemple 12 : Préparation de polylactides et fonctionnalisation, selon un mode séquencé

### 12.1- Protocole expérimental standard

On chauffe le lactide à 80°C. Après homogénéisation de la lactone, on ajoute l'agent initiateur. Pour la polymérisation, on chauffe pendant 3 heures à 80°C. On ajouté ensuite l'agent de fonctionnalisation, puis on porte le mélange à 100°C pendant une heure et à 120°C pendant une heure et demie. Le mélange réactionnel brut est récupéré et analysé.

L'exemple 12.2 suivant illustre l'application de ce protocole à l'obtention de polylactides fonctionnalisés.

12.2- Préparation d'un polylactide et fonctionnalisation par l'éthoxyéthanol (addition séquencée)

On opère selon le même mode opératoire que celui décrit à l'exemple 12.1, avec 2,88 g (0,02 mole) de lactide, 185 mg de TBD et 1,8 g d'éthoxyéthanol (0,02 mole). Le rapport molaire M/l est de 15. L'addition de l'agent initiateur en une seule fois provoque la solubilisation et une augmentation de température jusqu'à 38°C. Au bout de deux heures de réaction à 90°C, la solution se colore légèrement en rouge-brun. On analyse l'échantillon brut et l'échantillon est lavé comme précédemment.

Le spectre RMN ¹³C comporte un C = O à δ = 172,416 ppm (C = O de Ta polycaprolactone), un C = O à δ = 172,622 ppm (C=O couplé à l'agent initiateur) et un C = O faible à δ = 172,224 ppm (attribué au C = O de l'ester éthoxyéthanol).

## Revendications

1. Procédé d'obtention de polymères oxacarbonylés selon lequel on dispose au moins d'un monomère, comprenant au moins une fonction oxacarbonylée cyclique, d'un agent initiateur, et on effectue la polymérisation ou la copolymérisation dudit monomère, en masse ou en solution,
ledit procédé étant **caractérisé en ce que**
l'agent initiateur est choisi parmi les composés de guanidine bicyclique répondant à la formule (I) ou (II) 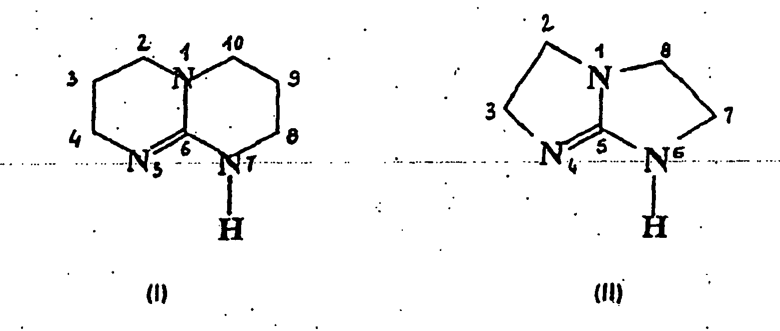 et parmi les composés de guanidine bicyclique répondant à la formule (I) dans laquelle au moins l'une quelconque des positions 2, 3, 4,
8, 9 et 10 est substituée et parmi les composés de guanidine bicyclique répondant à la formule (II) dans laquelle au moins l'une quelconque des positions 2, 3, 7 et 8 est substituée, ladite position au moins étant substituée, par au moins un radical choisi parmi les groupes alkyles ayant de 1 à 6 atomes de carbone, les groupes cycloalkyles ayant de 5 à 7 atomes de carbone, les chaînes hydrocarbonées de polystyrène.

2. Procédé selon la revendication 1, **caractérisé en ce que** l'agent initiateur est le 7H-1,5,7-triaza-bicyclo[4.4.0]déc-5-ène.

3. Procédé selon la revendication 1, **caractérisé en ce que** la fonction oxacarbonylée cyclique du monomère est une fonction lactone.

4. Procédé selon la revendication 3, **caractérisé en ce que** le monomère est choisi parmi la ε-caprolactone, la δ-valérolactone, la β-butyrolactone, la γ-butyrolactone, la 2,6-diméthyl-1,4-dioxan-2,5-dione, la 1,4-dioxan-2,5-dione.

5. Procédé selon la revendication 1 et 4, **caractérisé en ce qu'**on dispose d'au moins deux monomères différents.

6. Procédé selon la revendication 1, **caractérisé en ce que** le rapport molaire du monomère ou des monomères à l'agent initiateur varie de 1 à 500, de préférence de 1 à 200.

7. Procédé selon la revendication 1, **caractérisé en ce que** la réaction est effectuée à une température variant de 0°C à 150°C.

8. Procédé selon la revendication 7, **caractérisé en ce que** la réaction est effectuée à une température variant de 50°C à 120°C.

9. Procédé selon la revendication 7 ou 8, **caractérisé en ce que** la réaction de polymérisation est effectuée en masse ou dans un solvant choisi parmi le tétrahydrofurane, le toluène, l'acétone, le dibutyléther.

10. Procédé selon la revendication 1, **caractérisé en ce qu'**on ajoute au monomère et à l'agent initiateur, un agent de fonctionnalisation.

11. Procédé selon la revendication 10, **caractérisé en ce que** l'agent de fonctionnalisation est une molécule ou une macromolécule, linéaire ou ramifiée, contenant au moins une fonction alcool, une fonction amine ou une fonction ester.

12. Procédé selon la revendication 11, **caractérisé en ce que** l'agent de fonctionnalisation est choisi parmi le butanol, l'éthoxyéthanol, le pentaérythritol, l'allylamine, la méthoxyéthylamine, la décylamine, l'éthoxyéthanolamine et les esters d'acide carboxylique.

13. Procédé selon la revendication 11, **caractérisé en ce que** l'agent de fonctionnalisation est choisi parmi les polymères et copolymères d'alkylène glycol tels que les polymères et copolymères d'éthylène glycol (PEG), les mélanges desdits polymères, les mélanges desdits copolymères et les mélanges desdits polymères et copolymères.

14. Procédé selon la revendication 13, **caractérisé en ce que** l'agent de fonctionnalisation est choisi parmi les copolymères d'éthylène (PEG) et de propylène (PPG) et leurs mélanges.

15. Procédé selon la revendication 11, **caractérisé en ce que** l'agent de fonctionnalisation est choisi parmi les polyglucosides tels que la gomme xanthane, la gomme guar ou un dextrane.

16. Procédé selon la revendication 10, **caractérisé en ce que** l'agent de fonctionnalisation est un mélange d'au moins un polymère d'alkyléne glycol selon la revendication 13 et d'au moins un polyglucoside selon la revendication 15.

17. Procédé selon la revendication 10, **caractérisé en ce que** la polymérisation et la fonctionnalisation sont réalisées séquentiellement.

18. Procédé selon la revendication 10, **caractérisé en ce que** la polymérisation et la fonctionnalisation sont réalisées simultanément en masse ou dans un solvant.

19. Polymère oxacarbonylé susceptible d'être obtenu par un procédé selon l'une quelconque des revendications 10 à 18.

20. Utilisation d'un composé de guanidine bicyclique répondant à la formule (I) ou (II) 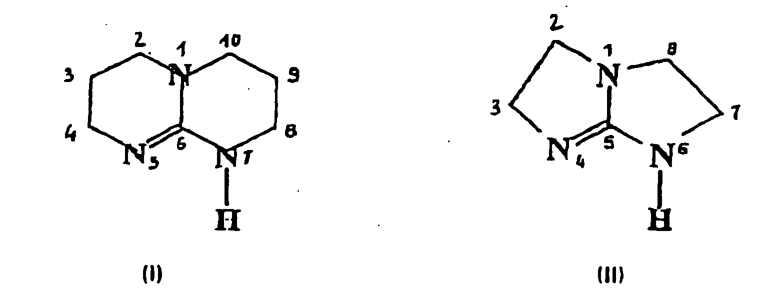 dans laquelle l'un et/ou l'autre des cycles peut être substitué, en au moins l'une quelconque des positions 2, 3, 4, 8, 9 et 10 de la formule (I) ou en au moins l'une quelconque des positions 2, 3, 7 et 8 de la formule (II), par au moins un radical choisi parmi les groupes alkyles ayant de 1 à 6 atomes de carbone, les groupes cycloalkyles ayant de 5 à 7 atomes de carbone, les chaînes hydrocarbonées de polystyrène, pour initier la réaction de polymérisation ou de copolymérisation de monomères comprenant au moins une fonction oxacarbonylée cyclique.

21. Utilisation selon la revendication 20 **caractérisée en ce que** le composé de guanidine bicyclique est le 7H-1,5,7-triazabicyclo[4.4.0]déc-5-ène.

## Claims

1. Process for producing oxacarbonylated polymers, according to which at least a monomer comprising at least one cyclic oxacarbonyl function, and an initiator, are available and the polymerization or copolymerization of said monomer is carried out in bulk or in solution,
said process being **characterized in that**
the initiator is chosen from the bicyclic guanidine compounds corresponding to formula (I) or (II) 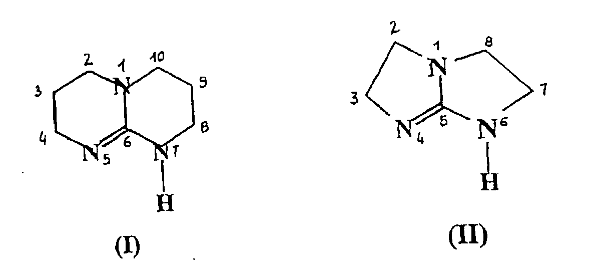 and from the bicyclic guanidine compounds corresponding to formula (I) in which at least any one of positions 2, 3, 4, 8, 9 and 10 is substituted and from the bicyclic guanidine compounds corresponding to formula (II) in which at least any one of positions 2, 3, 7 and 8 is substituted, said position at least being substituted with at least one radical chosen from alkyl groups having from 1 to 6 carbon atoms, cycloalkyl groups having from 5 to 7 carbon atoms and the hydrocarbon-based chains of polystyrene.

2. Process according to Claim 1, **characterized in that** the initiator is 7H-1,5,7-triazabicyclo[4.4.0]dec-5-ene.

3. Process according to Claim 1, **characterized in that** the cyclic oxacarbonyl function of the monomer is a lactone function.

4. Process according to Claim 3, **characterized in that** the monomer is chosen from ε-caprolactone, δ-valerolactone, β-butyrolactone, γ-butyrolactone, 2,6-dimethyl-1,4-dioxan-2,5-dione and 1,4-dioxan-2,5-dione.

5. Process according to Claims 1 and 4, **characterized**
**in that** at least two different monomers are available.

6. Process according to Claim 1, **characterized in that** the molar ratio of the monomer(s) to the initiator ranges from 1 to 500, preferably from 1 to 200.

7. Process according to Claim 1, **characterized in that** the reaction is carried out at a temperature ranging from 0°C to 150°C.

8. Process according to Claim 7, **characterized in that** the reaction is carried out at a temperature ranging from 50°C to 120°C.

9. Process according to Claim 7 or 8, **characterized in that** the polymerization reaction is carried out in bulk or in a solvent chosen from tetrahydrofuran, toluene, acetone and dibutyl ether.

10. Process according to Claim 1, **characterized in that** a functionalizing agent is added to the monomer and to the initiator.

11. Process according to Claim 10, **characterized in that** the functionalizing agent is a linear or branched molecule or macromolecule containing at least one alcohol function, one amine function or one ester function.

12. Process according to Claim 11, **characterized in that** the functionalizing agent is chosen from butanol, ethoxyethanol, pentaerythritol, allylamine, methoxyethylamine, decylamine, ethoxyethanolamine and esters of carboxylic acids.

13. Process according to Claim 11, **characterized in that** the functionalizing agent is chosen from polymers and copolymers of alkylene glycol, such as polymers and copolymers of ethylene glycol (PEG), mixtures of said polymers, mixtures of said copolymers and mixtures of said polymers and copolymers.

14. Process according to Claim 13, **characterized in that** the functionalizing agent is chosen from copolymers of ethylene (PEG) and of propylene (PPG) and mixtures thereof.

15. Process according to Claim 11, **characterized in that** the functionalizing agent is chosen from polyglucosides such as xanthan gum, guar gum or a dextran.

16. Process according to Claim 10, **characterized in that** the functionalizing agent is a mixture of at least one alkylene glycol polymer according to Claim 13 and of at least one polyglucoside according to Claim 15.

17. Process according to Claim 10, **characterized in that** the polymerization and the functionalization are carried out sequentially.

18. Process according to Claim 10, **characterized in that** the polymerization and the functionalization are carried out simultaneously in bulk or in a solvent.

19. Oxacarbonylated polymer which can be produced using a process according to any one of Claims 10 to 18.

20. Use of a bicyclic guanidine compound corresponding to formula (I) or (II) 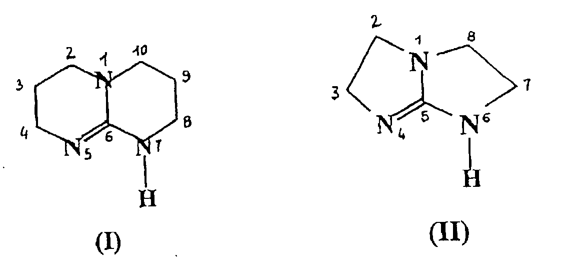 in which one and/or the other of the rings may be substituted, in at least any one of positions 2, 3, 4, 8, 9 and 10 of formula (I) or in at least any one of positions 2, 3, 7 and 8 of formula (II), with at least one radical chosen from alkyl groups having from 1 to 6 carbon atoms, cycloalkyl groups having from 5 to 7 carbon atoms and the hydrocarbon-based chains of polystyrene, for initiating the reaction of polymerization or of copolymerization of monomers comprising at least one cyclic oxacarbonyl function.

21. The use according to Claim 20, **characterized in that** the bicyclic guanidine compound is 7H-1,5,7-triazabicyclo[4.4.0]dec-5-ene.

## Patentansprüche

1. Verfahren zum Erhalt von oxacarbonylierten Polymeren, gemäß dem mindestens ein Monomer, das mindestens eine cyclische oxacarbonylierte Funktion umfasst, ein Initiator bereitgestellt wird und die Polymerisation oder Copolymerisation des Monomers in Masse oder in Lösung bewirkt wird,
wobei das Verfahren **dadurch gekennzeichnet ist, dass**
der Initiator ausgewählt ist aus bicyclischen Guanidin-Verbindungen, die der Formel (I) oder (II) entsprechen, 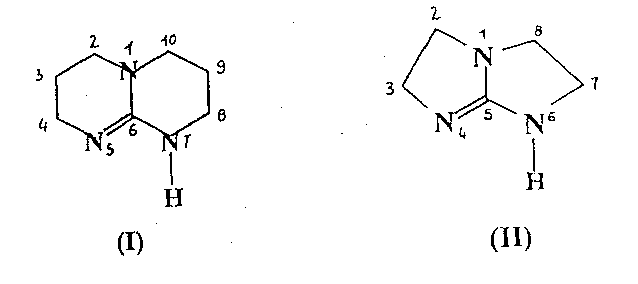 und aus den bicyclischen Guanidin-Verbindungen, die der Formel (I) entsprechen, in der mindestens eine beliebige der Positionen 2, 3, 4, 8, 9 und 10 substituiert ist, und aus den bicyclischen guanidin-Verbindungen, die der Formel (II) entsprechen, in der mindestens eine beliebige der Positionen 2, 3, 7 und 8 substituiert ist, wobei die Position mindestens mit mindestens einem Rest substituiert ist, der ausgewählt ist aus Alkylgruppen mit 1 bis 6 Kohlenstoffatomen, Cycloalkylgruppen mit 5 bis 7 Kohlenstoffatomen, Polystyrol-Kohlenwasserstoffketten.

2. Verfahren nach Anspruch 1, **dadurch gekennzeichnet, dass** der Initiator 7H-1,5,7-Triazabicyclo[4.4.0]dec-5-en ist.

3. Verfahren nach Anspruch 1, **dadurch gekennzeichnet, dass** die cyclische oxacarbonylierte Funktion des Monomers eine Lacton-Funktion ist.

4. Verfahren nach Anspruch 3, **dadurch gekennzeichnet, dass** das Monomer ausgewählt ist aus ε-Caprolacton, δ-Valerolacton, β-Butyrolacton, γ-Butyrolacton, 2,6-Dimethyl-1,4-dioxan-2,5-dion, 1,4-Dioxan-2,5-dion.

5. Verfahren nach Anspruch 1 und 4, **dadurch gekennzeichnet, dass** mindestens zwei verschiedene Monomere bereitgestellt werden.

6. Verfahren nach Anspruch 1, **dadurch gekennzeichnet, dass** das Molverhältnis des Monomers oder der Monomere zum Initiator von 1 bis 500, vorzugsweise von 1 bis 200 variiert.

7. Verfahren nach Anspruch 1, **dadurch gekennzeichnet, dass** die Umsetzung bei einer Temperatur von 0°C bis 150°C bewirkt wird.

8. Verfahren nach Anspruch 7, **dadurch gekennzeichnet, dass** die Umsetzung bei einer Temperatur von 50°C bis 120°C bewirkt wird.

9. Verfahren nach Anspruch 7 oder 8, **dadurch gekennzeichnet, dass** die Polymerisationsreaktion in Masse oder in einem Lösungsmittel bewirkt wird, das aus Tetrahydrofuran, Toluol, Aceton, Dibutylether ausgewählt ist.

10. Verfahren nach Anspruch 1, **dadurch gekennzeichnet, dass** man zu dem Monomer und dem Initiator ein Funktionalisierungsmittel gibt.

11. Verfahren nach Anspruch 10, **dadurch gekennzeichnet, dass** das Funktionalisierungsmittel ein Molekül oder ein Makromolekül, linear oder verzweigt, ist, das mindestens eine Alkoholfunktion, eine Aminfunktion oder eine Esterfunktion enthält.

12. Verfahren nach Anspruch 11, **dadurch gekennzeichnet, dass** das Funktionalisierungsmittel ausgewählt ist aus Butanol, Ethoxyethanol, Pentaerythrit, Allylamin, Methoxyethylamin, Decylamin, Ethoxyethanolamin und Carbonsäureestern.

13. Verfahren nach Anspruch 11, **dadurch gekennzeichnet, dass** das Funktionalisierungsmittel ausgewählt ist aus den Polymeren und Copolymeren von Alkylenglycol, wie den Polymeren und Copolymeren von Ethylenglycol (PEG), den Mischungen der Polymere, den Mischungen der Copolymere und den Mischungen der Polymere und Copolymere.

14. Verfahren nach Anspruch 13, **dadurch gekennzeichnet, dass** das Funktionalisierungsmittel ausgewählt ist aus Ethylen-Copolymeren (PEG) und Propylen-Copolymeren (PPG) und deren Mischungen.

15. Verfahren nach Anspruch 11, **dadurch gekennzeichnet, dass** das Funktionalisierungsmittel ausgewählt ist aus Polyglucosiden, wie Xanthangummi, Guargummi oder Dextran.

16. Verfahren nach Anspruch 10, **dadurch gekennzeichnet, dass** das Funktionalisierungsmittel eine Mischung aus mindestens einem Alkylenglycol-Polymer nach Anspruch 13 und mindestens einem Polyglucosid nach Anspruch 15 ist.

17. Verfahren nach Anspruch 10, **dadurch gekennzeichnet, dass** die Polymerisation und die Funktionalisierung nacheinander durchgeführt werden.

18. Verfahren nach Anspruch 10, **dadurch gekennzeichnet, dass** die Polymerisation und die Funktionalisierung gleichzeitig in Masse oder in einem Lösungsmittel durchgeführt werden.

19. Oxacarbonlyiertes Polymer, erhältlich durch ein Verfahren nach irgendeinem der Ansprüche 10 bis 18.

20. Verwendung einer bicyclischen Guanidin-Verbindung, die der Formel (I) oder (II) entspricht 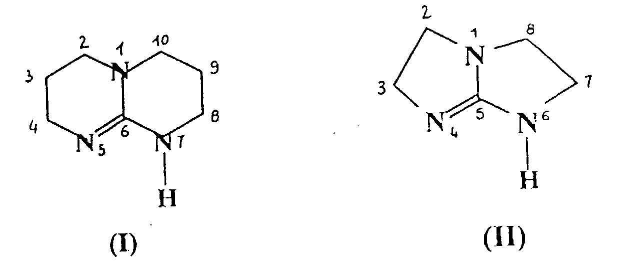 in dem der eine und/oder der andere der Cyclen in mindestens einer beliebigen der Positionen 2, 3, 4, 8, 9 und 10 der Formel (I) oder in mindestens einer beliebigen der Positionen 2, 3, 7 und 8 der Formel (II) mit mindestens einem Rest substituiert sein kann, der ausgewählt ist aus Alkylgruppen mit 1 bis 6 Kohlenstoffatomen, Cycloalkylgruppen mit 5 bis 7 Kohlenstoffatomen, Polystyrol-Kohlenwasserstoffketten, um die Polymerisations- und Copolymerisationsreaktion von Monomeren zu initiieren, die mindestens eine cyclische oxacarbonylierte Funktion umfassen.

21. Verwendung nach Anspruch 20, **dadurch gekennzeichnet, dass** die bicyclische Guanidin-Verbindung 7H-1,5,7-Triazabicyclo[4.4.0]dec-5-en ist.
